# EUROPEAN PATENT APPLICATION

(11) **EP 2 402 901 A1**
(43) Date of publication of application: **04.01.2012**
(21) Application number: 11170487.0
(22) Date of filing: 20.06.2011
(51) Int. Cl.: G06Q 30/00, G06F 3/12, H04N 1/34

(54) **Management server and management method thereof**

(30) Priority: 30.06.2010 KR 20100062842
(71) Applicant: Samsung Electronics Co., Ltd., Suwon-si, Gyeonggi-do 442-742 (KR)
(72) Inventor: Park, Ji-yun, Daegu (KR)
(74) Representative: Fearnside, Andrew Simon

(57) **Abstract**

A management server is provided. The management server includes a reception unit which receives information regarding expendable supplies status from at least one image forming apparatus, a storage unit which stores a management condition for each item of expendable supplies of the at least one image forming apparatus, a management unit which manages expendable supplies in an automatic management mode or in a manual management mode according to the stored management condition for each item of expendable supplies, and a controller which changes an expendable supplies management mode for each item of each image forming apparatus by resetting an expendable supplies management condition for each item of the at least one image forming apparatus according to expendable supplies management status of each of the at least one image forming apparatus. Accordingly, an order for expendable supplies may be placed effectively.

## Description

### CROSS-REFERENCE TO RELATED APPLICATIONS

This application claims priority benefit from Korean Patent Application No. 2010-62842, filed in the Korean Intellectual Property Office on June 30, 2010, the disclosure of which is incorporated herein by reference.

### BACKGROUND

### 1. Field

Aspects of the exemplary embodiments relate to a management server and a method for managing thereof, and more particularly, to a management server which manages at least one image forming apparatus and a managing method thereof.

### 2. Description of the Related Art

In an expendable supplies ordering system of a conventional managed printing services (MPS) solution, an order is placed following a certain setting. Specifically, the ordering system may be divided into a manual system and an automatic system depending on which is a main subject that controls the system.

According to the manual system, a manager checks a list of expendable supplies which need to be replaced and places an order. The expandable supplies may be ordered through an ordering system connected to the solution or the manager may place an order by sending an e-mail to a purchasing place. According to the automatic system, the expendable supplies that need to be replaced are checked and an order for the expendable supplies is placed by the solution automatically.

The time when expendable supplies should be replaced may be determined according to an algorithm for monitoring expendable supplies of the solution. That is, if the stock level of expendable supplies is below a certain threshold value (for example, - 10%), the solution may determine that the supplies should be replaced and place an order.

According to the ordering system where a manager inquires a request for expendable supplies provided by the solution and places an order accordingly, the manager should perform the above process repeatedly. If the manager is absent, the purchasing process would not be performed smoothly, causing delay of work.

According to the automatic ordering system, the expendable supplies that need to be replaced are checked and purchased automatically. However, if a purchasing place is different for each output apparatus and the change in a purchasing place is not reflected timely, an order could be placed to a wrong purchasing place. In addition, if a new purchasing place is not registered, an order could not be placed to the new purchasing place until the manager registers the new purchasing office. In other words, even an automatic ordering system requires management by a manager.

Furthermore, in the automatic ordering system, a delivery time of expendable supplies are set for every output apparatus en bloc by the solution. Therefore, output from an output apparatus which is used frequently may be delayed due to delivery which is not made timely, and the expendable supplies of output equipment which is used less frequently could be replaced unnecessarily, causing waste of budget and A/S resources.

In addition, in the automatic ordering system, a threshold value which determines the time to replace expendable supplies is set identically for each output apparatus. Therefore, even though the output apparatus can perform outputting, the apparatus would delay outputting while setting off a warning or would stop outputting completely, causing inconvenience to a user.

### SUMMARY

Aspects of the exemplary embodiments relate to a management server which manages each image forming apparatus by item manually or automatically and a managing method thereof.

According to the present invention there is provided an apparatus and method as set forth in the appended claims. Other features of the invention will be apparent from the dependent claims, and the description which follows.

A management server, according to an exemplary embodiment, includes a reception unit which receives information regarding expendable supplies status from at least one image forming apparatus, a storage unit which stores a management condition for each item of expendable supplies of the at least one image forming apparatus, a management unit which manages expendable supplies in an automatic management mode or in a manual management mode according to the stored management condition for each item of expendable supplies, and a controller which changes an expendable supplies management mode for each item of each image forming apparatus by resetting an expendable supplies management condition for each item of the at least one image forming apparatus according to expendable supplies management status of each of the at least one image forming apparatus.

The management unit may manage each image forming apparatus in an automatic mode or in a manual mode according to a mode set for each of the at least one image forming apparatus.

The management condition for each item of expendable supplies may include whether to manage at least one item of residue amount of expendable supplies and an expected time to replace expendable supplies in an automatic management mode or in a manual management mode.

The storage unit further may store information regarding a time period for automatic management, and the management unit may operate in the automatic management mode during a time period set for the automatic management and operate in a manual management mode during a remaining time period.

If an item needs to be replaced, the management unit may place an order for the item to a corresponding purchasing place automatically in the automatic management mode.

The expendable supplies management status may include expendable supplies replacement history and error status according to residue amount of the expendable supplies, and the controller may change an expendable supplies management mode for each item of each image forming apparatus by resetting a expendable supplies management condition for each item of the at least one image forming apparatus in accordance with expendable supplies replacement history and error status according to residue amount of the expendable supplies.

The information regarding expendable supplies status may include information regarding an image forming apparatus, expendable supplies, order for expendable supplies and expendable supplies replacement history, the information regarding expendable supplies may include at least one of a serial number, name, and manufacturer of expendable supplies, and the replacement history of expendable supplies may include a date of replacing expendable supplies.

The management server may further include a notification unit which notifies ordering status of at least one ordering process to a manager while the ordering process is performed by the management unit.

The management server may be formed inside or outside the image forming apparatus.

The management server may provide MPS.

A managing method, according to an exemplary embodiment, includes receiving information regarding expendable supplies status from at least one image forming apparatus, managing expendable supplies in an automatic management mode or in a manual management mode according to the stored management condition for each item of expendable supplies, and changing an expendable supplies management mode for each item of each image forming apparatus by resetting an expendable supplies management condition for each item of the at least one image forming apparatus according to expendable supplies management status of each of the at least one image forming apparatus.

The method may further include setting an automatic mode or a manual mode for the at least one image forming apparatus, and the managing may include managing each image forming apparatus in an automatic mode or in a manual mode according to a mode set for each of the at least one image forming apparatus.

The management condition for each item of expendable supplies may include whether to manage at least one item of residue amount of expendable supplies and an expected time to replace expendable supplies in an automatic management mode or in a manual management mode.

The method may further include storing information regarding a time period for automatic management, and managing to operate in the automatic management mode during a time period set for the automatic management and to operate in a manual management mode during a remaining time period.

If an item needs to be replaced, the method may further include placing an order for the item to a corresponding purchasing place automatically in the automatic management mode.

The expendable supplies management status may include expendable supplies replacement history and error status according to residue amount of the expendable supplies, and the changing may include changing an expendable supplies management mode for each item of each image forming apparatus by resetting a expendable supplies management condition for each item of the at least one image forming apparatus in accordance with expendable supplies replacement history and error status according to residue amount of the expendable supplies.

The information regarding expendable supplies status may include information regarding an image forming apparatus, expendable supplies, order for expendable supplies and expendable supplies replacement history, the information regarding expendable supplies may include at least one of a serial number, name, and manufacturer of expendable supplies, and the replacement history of expendable supplies may include a date of replacing expendable supplies.

The method may further include notifying ordering status of at least one ordering process to a manager if a process of ordering expendable supplies is being performed.

The management server may be formed inside or outside the image forming apparatus.

The management server may provide MPS.

### BRIEF DESCRIPTION OF THE DRAWINGS

The above and/or other aspects of the present disclosure will be more apparent by describing certain present disclosure with reference to the accompanying drawings, in which:
FIG. 1 is a view to explain an output management system according to an exemplary embodiment;
FIG. 2 is a view illustrating configuration of an management server according to an exemplary embodiment;
FIG. 3 is a view to explain a method for setting a management condition according to an exemplary embodiment;
FIGS. 4A to 4D are views to explain a method for setting a management condition according to various exemplary embodiments; and
FIG. 5 is a flowchart to explain a method for managing an image forming apparatus according to an exemplary embodiment.

### DETAILED DESCRIPTION

Certain exemplary embodiments are described in higher detail below with reference to the accompanying drawings.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

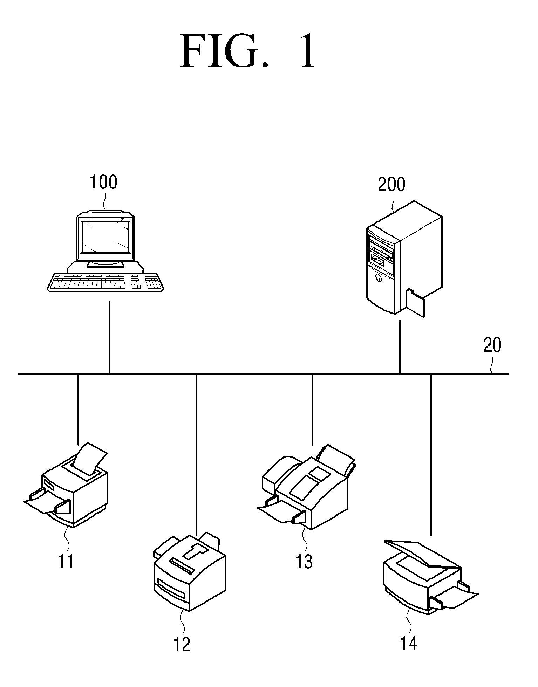

FIG. 1 is a view to explain an output management system according to an exemplary embodiment.

The output management system may be based on MPS (managed printing services).

MPS is a solution which manages assets of output equipment by registering every enterprise equipment on a network, collects data regarding the output equipment remotely, and provides a report regarding output status of each output equipment. In addition, the solution includes an automatic detection function which places an order for expendable supplies when they are in short to prevent delay of work.

As illustrated in FIG. 1, an output management system may include a management server 100, a data server 200, a network 20, and a plurality of image forming apparatuses 11 to 14.

The management server 100 may be connected to the data server 200 and the plurality of image forming apparatuses 11 to 14 through the network 20. Herein, the network 20 may be realized as a local area network (LAN) and so forth. In the exemplary embodiment, the management server 100 is connected to the data server 200 and the plurality of image forming apparatuses 11 to 14 through the network 20. However an aspect of the technical feature is not limited thereto, and the management server 100 may be connected to the data server 200 and the plurality of image forming apparatuses 11 to 14 through other way such as local interface.

In addition, the plurality of image forming apparatuses 11 to 14 may be connected to a plurality of host apparatuses (not shown). Herein, the image forming apparatuses 11 to 14 may be realized in various forms such as a printer, scanner, a copier, and a multifunctional printer which combines at least two functions of the afore-mentioned apparatuses. The host apparatus (not shown) may be realized not only as a personal computer (PC) but also as a user terminal apparatus such as a personal digital assistant (PDA), a mobile phone, and a USB apparatus.

The management server 100 or the data server 200 may be formed separately from a plurality of host apparatuses (not shown), or in some cases, may be realized as one of a plurality of host apparatuses (not shown).

The management server 100 or the data server 200 may be realized as a web server embedded in the plurality of image forming apparatuses 11 to 14. In this case, the management server or the data server 200 may control each of the image forming apparatuses 11 to 14 using an application pre-stored or received from the outside.

Detailed configuration of the management server 100 and the data server 200 may be explained in detail later with reference to drawings.

In FIG. 1, the management server 100 and the data server 200 are embodied separately, but it is not limited thereto. The data server 200 may be formed inside the management server 100 in the form of database.

In addition, in Fig. 1, the management server 100 and the data server 200 may use the same network, but this is only an example. The management server 100 and the data server 200 may use a different network.

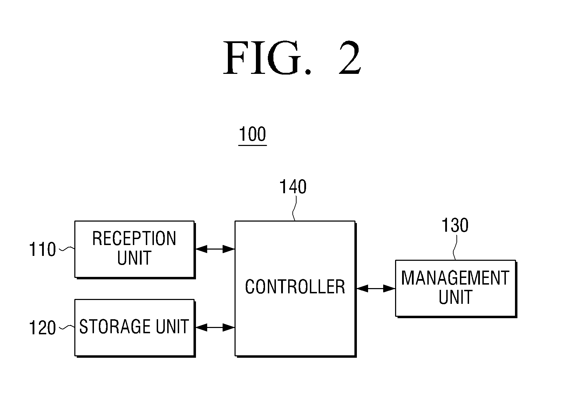

FIG. 2 is a view illustrating configuration of a management server according to an exemplary embodiment.

Referring to FIG. 2, the management server 100 may include a reception unit 110, a storage unit 120, a management unit 130, and a controller 140.

The reception unit 110 communicates with at least one of the image forming apparatuses 11 to 14 (see FIG. 1). Specifically, the reception unit 110 may receive information regarding status of expendable supplies from at least one of the image forming apparatuses 11 to 14.

The storage unit 120 may store a management condition of expendable supplies by item for at least one of the image forming apparatuses 11 to 14.

In addition, the storage unit 120 may store whether an expendable supplies management mode is manual or automatic for at least one of the image forming apparatuses 11 to 14, for example.

Herein, a management condition of each expendable supplies item and whether management is performed manually or automatically may be input by a user(or manager) through a user interface unit (not shown). That is, the user(or manager) may directly input a value necessary to set a management condition of each expendable supplies item and whether management is performed manually or automatically through a menu screen.

The management unit 130 may manage each expendable supplies item manually or automatically according to a management condition of expendable supplies stored in the storage unit 120.

In addition, the management unit 130 may manage each expendable supplies item manually or automatically according to a mode of each image forming apparatus stored in the storage unit 120.

The controller 140 may change an expendable supplies management mode of each image forming apparatus by re-setting a management condition of expendable supplies for each of the image forming apparatuses 11-14 (see FIG. 1) by item according to management status of each expendable supplies of at least one image forming apparatuses 11-14.

Herein, a management condition of each expendable supplies item include whether to set an automatic management mode or a manual management mode for managing at least one item of residue amount of expendable supplies and an expected time to replace expendable supplies.

In addition, the controller 140 may re-set a management condition of expendable supplies for each of the image forming apparatuses 11-14 (see FIG. 1) by item according to management status of each of expendable supplies of at least one image forming apparatuses 11-14. That is, residue amount of expendable supplies and an expected time to replace expendable supplies may be adjusted according to a usage pattern of each of the image forming apparatuses 11 to 14.

The storage unit 120 may store information regarding management status of expendable supplies of each of the image forming apparatuses 11 to 14.

Herein, the management status may include replacement history of expendable supplies and error status according to residue amount of the expendable supplies.

The controller 140 may change an expendable supplies management mode of each of the image forming apparatuses 11-14 by re-setting a management condition of expendable supplies for each of the image forming apparatuses 11-14 by item according to error status caused by replacement history and residue amount of the expendable supplies.

Herein, information regarding management status of expendable supplies of each of the image forming apparatuses 11 to 14 may be stored in a data server (not shown) which is formed separately.

The information regarding management status of expendable supplies may include information regarding each of the image forming apparatuses 11-14, information regarding expendable supplies, information regarding an order for expendable supplies, and replacement history of expendable supplies.

The information regarding expendable supplies may include at least one of a serial number, name, and manufacturer of expendable supplies. The replacement history of expendable supplies may include a date of replacing expendable supplies.

The storage unit 120 may further include information regarding a time period during which management is performed automatically.

In this case, the management unit 130 may manage each of the image forming apparatuses 11-14 to operate in an automatic management mode during a time period where management is set to be performed automatically and to operate in a manual mode at other times.

If there are expendable supplies that need to be replaced, the management unit 130 may automatically place an order for the expendable supplies to a corresponding purchasing place. In this case, the corresponding purchasing place may be determined with reference to replacement history of the expendable supplies, or the corresponding purchasing place may be predetermined.

While the management unit 130 performs a process of ordering expendable supplies, a notification unit (not shown) may notify a manager of ordering status of at least one ordering process. Specifically, the notification unit (not shown) may notify a manager of at lease one ordering status of placing an order, delivery, and completion of replacement of expendable supplies.

In this case, the notification unit (not shown) may notify ordering status through a pop-up message, e-mail, short messenger service (SMS), and so forth.

Meanwhile, the management server 100 may be based on the afore-mentioned MPS.

In the above exemplary embodiment, the management server 100 is formed separately from the image forming apparatuses 11 to 14, but this is only an example. The management server 100 may be realized as a web server embedded in the image forming apparatuses 11 to 14.

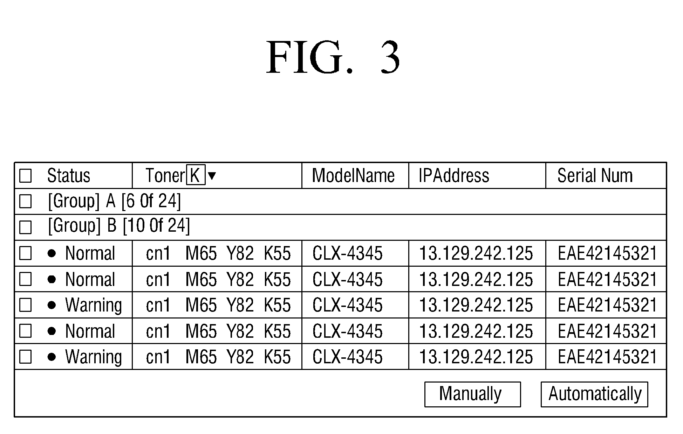

FIG. 3 is a view to explain a method for setting a management condition according to an exemplary embodiment.

Referring to FIG. 3, a management unit 130 of the management server 100 may set a management method of expendable supplies of each image forming apparatus to be an automatic management mode or a manual management mode using a touch panel, for example.

Specifically, a user(or manager) may set whether to manage each image forming apparatus manually or automatically in a list of UI including every item as illustrated in FIG. 3. That is, a management method of the afore-mentioned management server 100 may be applied to an apparatus which is set to be managed automatically.

In this case, a management condition may be set for every image forming apparatus uniformly or a management mode may set differently for each group or each apparatus. For example, a management mode of an image forming apparatus may be set differently for each floor of a company, or a management mode may be set differently depending on whether an image forming apparatus is a color image forming apparatus or a mono image forming apparatus. However, it is not limited thereto.

Alternatively, an initial management mode of the whole system may be predetermined when an image forming apparatus is produced. For example, a system may be pre-set to manage all image forming apparatuses automatically.

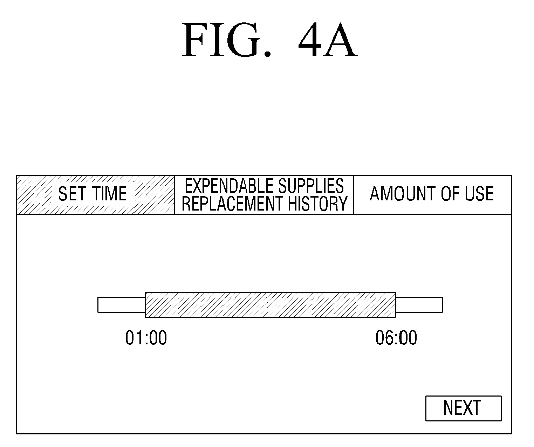

FIGS. 4A to 4D are views to explain a method for setting a management condition according to various exemplary embodiments.

According to FIGS. 4A to 4D, a user(or manager) may register a management condition of an image forming apparatus to be managed in an automatic mode. The registered management condition is automatically managed by the management server 100.

Hereinafter, automatic management where usage time, expendable supplies replacement history, toner residue and expected replacement time are managed automatically will be explained. However, this is only an example, and a condition to be managed automatically can be freely selected and stored by the user(or manager).

In addition, an automatic management condition may be set differently for each group or each apparatus For example, an automatic management condition of an image forming apparatus may be set differently for each floor of a company, or an automatic management condition may be set differently depending on whether an image forming apparatus is a color image forming apparatus or a mono image forming apparatus. Alternatively, an automatic management condition may be predetermined when an image forming apparatus is produced and may be changed as occasion demands.

According to FIG. 4A, a user(or manager) may set a time to manage a plurality of image forming apparatus automatically which are set to be managed automatically. That is, the plurality of image forming apparatuses may not be always managed automatically but be managed automatically only during a predetermined period of time.

Accordingly, every image forming apparatus is managed automatically by the management server 100 during a predetermined time period. For example, a user(or manager) may set an automatic management time while it is not a working time or the user(or manager) is absent, so that an order may be placed automatically if, for example, toner replacement is requested.

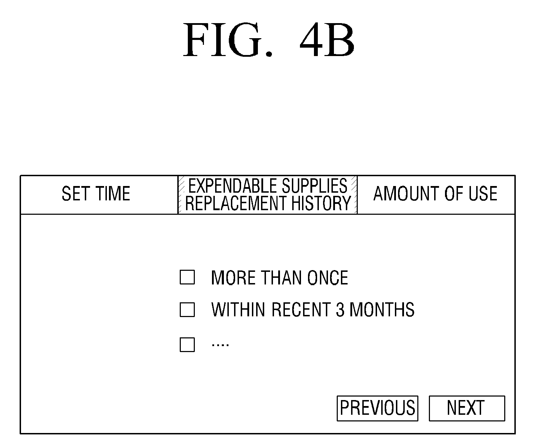

According to FIG. 4B, expendable supplies replacement history may be set as an automatic management condition. That is, automatic ordering can be performed with reference to expendable supplies replacement history.

For example, if there is replacement history of an image forming apparatus, this means a delivery place of expendable supplies is already set for the image forming apparatus. Therefore, if expendable supplies need to be replaced, an order can be placed automatically to the previous delivery place.

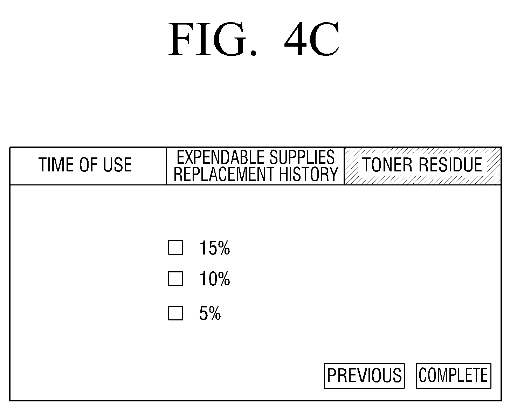

According to FIG. 4C, toner residue may be set as an automatic management condition. That is, if toner residue is below a certain amount (or less than a certain amount), the management server 100 may place an order automatically to prevent any inconvenience that may be caused due to lack of toner.

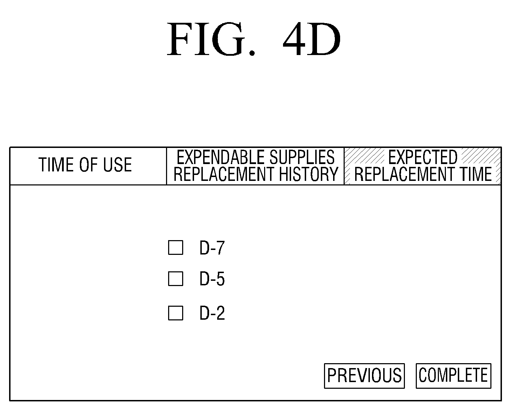

According to FIG. 4D, an expected replacement time may be set as an automatic management condition. That is, an order for expendable supplies may be placed automatically according to a set replacement time. Herein, the expected replacement time may be calculated based on difference between a previous average usage time and a current usage time.

As described above, every image forming apparatus which is set to be managed in "an automatic management mode" may be managed automatically. The image forming apparatuses which are subject to the management conditions set in FIGS. 4B to 4D are managed automatically and thus management of their expendable supplies status and purchase of the expendable supplies are performed automatically.

If expendable supplies need to be replaced, the management unit 130 may replace the expendable supplies after checking a management condition set in an image forming apparatus.

If the expendable supplies are purchased by the management unit 130, purchase history (a purchasing place, a person responsible for purchasing, and a replacement date) and replacement information (a serial number and model name of expendable supplies, and so forth) of each image forming apparatus may be stored in the storage unit 120 or a data server (not shown).

In addition, information regarding usage pattern of an image forming apparatus such as frequency of usage per hour, replacement period of expendable supplies may be updated in the storage unit 120 or a data server (not shown).

If usage patterned is re-confirmed along with replacement of expendable supplies, the controller 140 may re-set a purchasing method of each image forming apparatus.

Specifically, the controller 140 may generate a list of image forming apparatuses of which management mode would be changed from an automatic management to a manual management or verse versa based on information regarding usage pattern stored in the storage unit 120 or a data server (not shown).

Subsequently, a management mode of a corresponding image forming apparatus may be changed automatically based on the generated list. Alternatively, the generated list may be provided to a user(or manager), and the user(or manager) may change the management mode of the corresponding image forming apparatus.

Hereinafter, examples of changing a management mode will be explained briefly.

If an image forming apparatus which is set to operate in a manual management mode is used in an automatic management time period for more than 60% of its usage frequency per hour, the management mode may be changed from a manual management mode to an automatic management mode.

If expendable supplies replacement history of an image forming apparatus which is set to operate in a manual management mode is changed from '0' to '1', information regarding the expendable supplies replacement history may be registered in the management server 100, and thus the management mode may be changed from a manual management mode to an automatic management mode.

Meanwhile, if an image forming apparatus which is set to operate in an automatic management mode is used during a time which is not set for automatic management, the management mode may be changed from an automatic management mode to a manual management mode.

In addition, if a toner shortage warning or an error occurs even though toner residue of an image forming apparatus which is set to operate in an automatic management mode is more than a setting value which is set in the automatic management mode, the management mode may be changed from an automatic management mode to a manual management mode. For example, even though an automatic management mode sets toner residue to be less than 5% to place a toner replacement order, a toner shortage warning or an error may occur if output condition of a certain system sets the toner residue to be more than 10%.

Only conditions for automatic management may be changed while a management mode is maintained according to usage pattern of each image forming apparatus.

For example, if an image forming apparatus which is set to operate in an automatic management mode is frequently used during a time which is not set for automatic management, automatic management time period may be changed to reflect usage pattern of the image forming apparatus.

If a toner shortage warning or an error occurs even though toner residue of an image forming apparatus which is set to operate in an automatic management mode is more than a setting value which is set in the automatic management mode, a setting value may be changed upwardly.

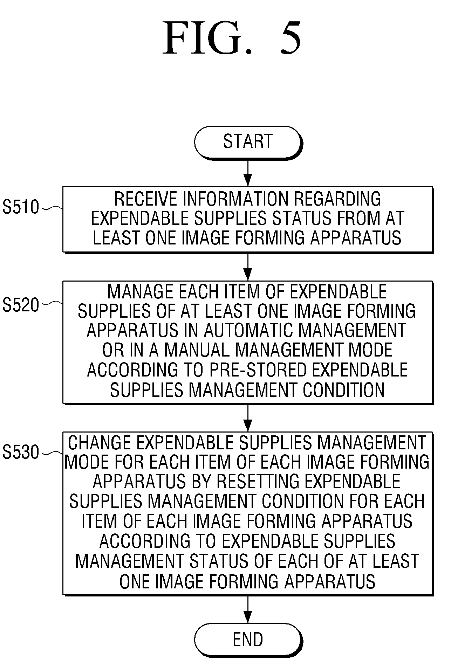

FIG. 5 is a flowchart to explain a method for managing an image forming apparatus according to an exemplary embodiment.

According to the method for managing at least one image forming apparatus by a management server illustrated in FIG. 5, if information regarding expendable supplies is received from at least one image forming apparatus (S510), each item of expendable supplies of at least one image forming apparatus is managed in an automatic mode or in a manual mode according to a pre-stored expendable supplies management condition for each item (S520). Herein, the expendable supplies management condition for each item may include whether to manage at least one item of residue amount of expendable supplies and an expected time to replace expendable supplies in an automatic management mode or in a manual management mode.

Subsequently, expendable supplies management mode for each item is changed for each image forming apparatus by resetting an expendable supplies management condition for each item of at least one image forming apparatus according to expendable supplies management status of each of the at least one image forming apparatus (S530).

In addition, whether to manage at least one image forming apparatus in an automatic management mode or in a manual management mode may be determined.

In this case, in operation S520, each of the at least one image forming apparatus is managed in an automatic management mode or in a manual management mode according to a mode set for each of the at least one image forming apparatus.

In addition, information regarding automatic management time period is stored, and thus an image forming apparatus operates automatically during a time period which is set for automatic management and operates manually during the remaining time period.

In an automatic management mode, if an item needs to be replaced, an order to replace the item may be placed automatically to a corresponding purchasing place.

If an expendable supplies management mode for each item is changed for each image forming apparatus as an expendable supplies management condition for each item is reset, a changed expendable supplies management mode may be applied thereinafter.

Expendable supplies management status includes expendable supplies replacement history and error status according to residue amount of the expendable supplies, and the step of changing an expendable supplies management mode for each item may change an expendable supplies management mode for each item of each image forming apparatus by resetting a expendable supplies management condition for each item of at least one image forming apparatus in accordance with expendable supplies replacement history and error status according to residue amount of the expendable supplies.

The information regarding expendable supplies management status may include information regarding an image forming apparatus, expendable supplies, order for expendable supplies and expendable supplies replacement history, and the information regarding expendable supplies may include at least one of a serial number, name, and manufacturer of expendable supplies. The replacement history of expendable supplies may include a date of replacing expendable supplies.

While expendable supplies are being ordered, ordering status of at least one ordering process may be notified to a user(or manager).

The management server may be formed inside or outside of the image forming apparatus.

In addition, the management server may provide MPS.

As described above, the part of ordering process to be performed automatically or manually may be determined according to usage pattern of an image forming apparatus, and thus an ordering system suitable for usage pattern of a company using solution may be provided.

In addition, managing process managed by a user(or manager) is reduced, managing cost may decrease.

Furthermore, expendable supplies are ordered and replaced appropriately for each image forming apparatus, and thus replacement cost is also reduced.

As expendable supplies are replaced promptly, work delay is prevented, improving work efficiency. Accordingly, user satisfaction may be maximized.

Although a few embodiments have been shown and described, it would be appreciated by those skilled in the art that changes may be made in this embodiment without departing from the principles and spirit of the invention, the scope of which is defined in the claims and their equivalents.

## Claims

1. A management server, comprising:
a reception unit which receives information regarding expendable supplies status from at least one image forming apparatus;
a storage unit which stores a management condition for each item of expendable supplies of the at least one image forming apparatus;
a management unit which manages expendable supplies in an automatic management mode or in a manual management mode according to the stored management condition for each item of expendable supplies; and
a controller which changes an expendable supplies management mode for each item of each image forming apparatus by resetting an expendable supplies management condition for each item of the at least one image forming apparatus according to expendable supplies management status of each of the at least one image forming apparatus.

2. The management server as claimed in claim 1, wherein the management unit manages each image forming apparatus in an automatic mode or in a manual mode according to a mode set for each of the at least one image forming apparatus.

3. The management server as claimed in claim 1 or 2, wherein the management condition for each item of expendable supplies includes whether to manage at least one item of residue amount of expendable supplies and an expected time to replace expendable supplies in an automatic management mode or in a manual management mode.

4. The management server as claimed in any one in claim 1 to 3, wherein the storage unit further stores information regarding a time period for automatic management,
wherein the management unit operates in the automatic management mode during a time period set for the automatic management and operates in a manual management mode during a remaining time period.

5. The management server as claimed in any one in claim 1 to 4, wherein the management unit, if an item needs to be replaced, places an order for the item to a corresponding purchasing place automatically in the automatic management mode.

6. The management server as claimed in any one in claim 1 to 5, wherein the expendable supplies management status includes expendable supplies replacement history and error status according to residue amount of the expendable supplies,
wherein the controller changes an expendable supplies management mode for each item of each image forming apparatus by resetting a expendable supplies management condition for each item of the at least one image forming apparatus in accordance with expendable supplies replacement history and error status according to residue amount of the expendable supplies.

7. The management server as claimed in any one in claim 1 to 6, wherein the information regarding expendable supplies status includes information regarding an image forming apparatus, expendable supplies, order for expendable supplies and expendable supplies replacement history,
wherein the information regarding expendable supplies includes at least one of a serial number, name, and manufacturer of expendable supplies, and the replacement history of expendable supplies includes a date of replacing expendable supplies.

8. The management server as claimed in claim 5, further comprising:
a notification unit which notifies ordering status of at least one ordering process to a manager while the ordering process is performed by the management unit.

9. The management server as claimed in any one in claim 1 to 6, wherein the management server is formed inside or outside the image forming apparatus.

10. The management server as claimed in any one in claim 1 to 6, wherein the management server provides managed print services (MPS).

11. A managing method, comprising:
receiving information regarding expendable supplies status from at least one image forming apparatus;
managing expendable supplies in an automatic management mode or in a manual management mode according to the stored management condition for each item of expendable supplies; and
changing an expendable supplies management mode for each item of each image forming apparatus by resetting an expendable supplies management condition for each item of the at least one image forming apparatus according to expendable supplies management status of each of the at least one image forming apparatus.

12. The method as claimed in claim 11, further comprising:
setting an automatic mode or a manual mode for the at least one image forming apparatus,
wherein the managing comprises managing each image forming apparatus in an automatic mode or in a manual mode according to a mode set for each of the at least one image forming apparatus.

13. The method as claimed in claim 11 or 12, wherein the management condition for each item of expendable supplies includes whether to manage at least one item of residue amount of expendable supplies and an expected time to replace expendable supplies in an automatic management mode or in a manual management mode.

14. The method as claimed in any one in claim 11 to 13, further comprising:
storing information regarding a time period for automatic management; and
managing to operate in the automatic management mode during a time period set for the automatic management and to operate in a manual management mode during a remaining time period.

15. The method as claimed in any one in claim 11 to 13, wherein if an item needs to be replaced, placing an order for the item to a corresponding purchasing place automatically in the automatic management mode.
